# EUROPEAN PATENT APPLICATION

(11) **EP 4 353 755 A1**
(43) Date of publication of application: **17.04.2024**
(21) Application number: 22819969.1
(22) Date of filing: 28.04.2022
(51) Int. Cl.: C08F 20/28, C08L 33/14, C08L 61/10

(54) **CURABLE COMPOSITION AND CURED PRODUCT**

(30) Priority: 08.06.2021 JP 2021096154
(71) Applicant: Soken Chemical & Engineering Co., Ltd., Toshima-ku Tokyo 171-8531 (JP)
(72) Inventor: GOTO Shu-ichi, Tokyo 171-8531 (JP)
(74) Representative: Dehns
(86) International application number: PCT/JP2022/019242
(87) International publication number: WO 2022/259783

(57) **Abstract**

One embodiment of the present invention is a curable composition containing: a (meth)acrylic polymer (A) having a group represented by the following formula (1); a polymer (B) having a radiation-reactive group and having a number average molecular weight of 10,000 to 1,000,000 (but not including a group represented by the following formula (1)); and a xylene resin (C). Formula (1): -X-(CH₂)ₙ-SiR¹₃ [in the formula (1), n is an integer of 1 to 3; three R¹ groups are each independently an alkyl group with 1 to 20 carbon atoms, an alkoxy group with 1 to 20 carbon atoms, or a hydroxyl group, and at least one of R¹ groups is the alkoxy group or a hydroxyl group; X is a divalent group represented by -O-, - COO-, -S-, -N(R²)-, -CH(OH)-CH₂-O-, -O-CO-NH-, or -N(R²)-CO-N(R³)-; R² and R³ are each a hydrogen atom, a hydrocarbon group, or a halogenated hydrocarbon group, and R² and R³ may be the same or different.]

## Description

### Technical Field

One embodiment of the present invention relates to a curable composition and a cured product.

### Background Art

Curable compositions containing a polymer having a reactive silicon-containing group such as an alkoxysilyl group have been conventionally known as compositions that are cured by moisture present, for example, in the air or in an adherend, and have been widely used as products such as adhesives, adhesives, sealing materials, and coating materials, for example, in architectural/building material related uses and motor vehicles related uses.

In recent years, the products as described above are desired to have a wide variety of required performance, and for example, there are demands for adhesives such as a request to exhibit a difference in adhesive strength on the same adhesive surface and a request to adhere strongly in some parts on the same adhesive surface and to exhibit removability in other parts on the same adhesive surface. These demands are difficult to be achieved with a single reaction system only, and reactions of different mechanisms need to be combined.

As a composition combining reactions of different mechanisms, there has been proposed, for example, a dual cure type photocurable composition utilizing moisture curing and photocuring (for example, refer to Patent Literature 1 and Patent Literature 2).

### Citation List

### Patent Literature

Patent Literature 1: WO 2016/104787
Patent Literature 2: JP 2013-181121 A

### Summary of Invention

### Technical Problem

According to the studies made by the present inventors, the conventional dual-cure photocurable composition described above did not always have a good enough balance between its photocuring efficiency and its adhesiveness to adherends in some cases depending on the use.

The present invention has been made in view of the above-mentioned circumstances, and an object of the present invention is to provide a curable composition that is cured by both moisture and light, and has excellent balance between its adhesiveness to adherends and its photocuring efficiency.

### Solution to Problem

The present inventor has conducted intensive studies in view of the above-mentioned problems. As a result, the present inventor has found that the above-mentioned problems can be solved by using a curable composition in which a (meth)acrylic polymer having a crosslinkable silicon-containing group, a polymer having a radiation-reactive group, and a xylene resin are included, and has completed the present invention. An example of one embodiment of the present invention relates to, for example, the following [1] to [10].
[1] A curable composition, containing:
   a (meth)acrylic polymer (A) having a group represented by the following formula (1);
   a polymer (B) having a radiation-reactive group and having a number average molecular weight of 10,000 to 1,000,000; and
   a xylene resin (C);
   wherein the polymer (B) is does not have any group represented by formula (1):

      Formula (1): -X- (CH₂) ₙ-SiR¹₃
   [in the formula (1), n is an integer of 1 to 3; three R¹ groups are each independently an alkyl group with 1 to 20 carbon atoms, an alkoxy group with 1 to 20 carbon atoms, or a hydroxyl group, and at least one of R¹ groups is the alkoxy group or the hydroxyl group; X is a divalent group represented by -O-, -COO-, -S-, -N(R²)-, -CH(OH)-CH₂-O-, -O-CO-NH-, or -N(R²)-CO-N(R³)-; R² and R³ are each a hydrogen atom, a hydrocarbon group, or a halogenated hydrocarbon group, and R² and R³ may be the same or different.].
[2] The curable composition according to [1], wherein the curable composition contains 1 to 90 parts by mass of the (meth)acrylic polymer (A), 10 to 99 parts by mass of the polymer (B), and 10 to 1,000 parts by mass of the xylene resin (C) (provided that the total amount of the polymer (A) and the polymer (B) is 100 parts by mass).
[3] The curable composition according to [1] or [2], wherein the (meth)acrylic polymer (A) has a glass transition temperature of -80 to 100°C, a number average molecular weight of more than 1,000 and 100,000 or less, and contains 500 ppm or more of silicon element.
[4] The curable composition according to any of [1] to [3], wherein the number average molecular weight of the (meth)acrylic polymer (A) is smaller than the number average molecular weight of the polymer (B).
[5] The curable composition according to any of [1] to [4], wherein the polymer (B) is a polymer having a benzophenone group as a radiation-reactive group.
[6] The curable composition according to any of [1] to [5], wherein the polymer (B) is an acrylic polymer.
[7] The curable composition according to any of [1] to [6], wherein the xylene resin (C) has an acid value of 0.1 mgKOH/g or less.
[8] The curable composition according to any of [1] to [7], wherein the xylene resin (C) is an alkylphenol-modified xylene resin.
[9] The curable composition according to any of [1] to [8], wherein the curable composition further contains a curing catalyst (D), the curing catalyst (D) is a non-tin curing catalyst.
[10] A cured product obtained from the curable composition according to any of [1] to [9].

### Advantageous Effects of Invention

According to one embodiment of the present invention, a composition is cured by both moisture and light to make a difference between the adhesive strength of the composition on the light-irradiated surface and on the non-irradiated surface, thereby enabling to provide a curable composition having excellent balance between its adhesiveness to adherends and its photocuring efficiency.

### Description of Embodiments

Hereinafter, one embodiment of the present invention will be specifically described.

The curable composition (hereinafter also referred to as "composition of the present invention") of one embodiment of the present invention contains a (meth)acrylic polymer (A) to be described below.

In the present description, the term "(meth)acryl" is used as a general term for acryl and methacryl, and may be either acryl or methacryl, and the term "(meth)acrylate" is used as a general term for acrylate and methacrylate, and may be either acrylate or methacrylate.

### [(Meth)acrylic polymer (A)]

The (meth)acrylic polymer (A) (hereinafter also referred to as "polymer (A)") is a polymer having a group represented by the following formula (1).

Formula (1) : -X-(CH₂)ₙ-SiR¹₃

In the formula (1), n is an integer of 1 to 3; three R¹ groups are each independently an alkyl group with 1 to 20 carbon atoms, an alkoxy group with 1 to 20 carbon atoms, or a hydroxyl group, and at least one of R¹ groups is the alkoxy group or a hydroxyl group; X is a divalent group represented by -O-, -COO-, -S-, -N(R²)-, -CH(OH)-CH₂-O-, -O-CO-NH-, or - N(R²)-CO-N(R³)-; R² and R³ are each a hydrogen atom, a hydrocarbon group, or a halogenated hydrocarbon group, and R² and R³ may be the same or different.

As the alkyl group with 1 to 20 carbon atoms, examples thereof include linear or branched alkyl groups such as methyl group, ethyl group, n-propyl group, isopropyl group, n-butyl group, isobutyl group, n-pentyl group, isopentyl group, neopentyl group, n-hexyl group, 1-methylpentyl group, 4-methyl-2-pentyl group, 3,3-dimethylbutyl group, 2-ethylbutyl group, n-heptyl group, 1-methylhexyl group, n-octyl group, isooctyl group, 1-methylheptyl group, 2-ethylhexyl group, 2-propylpentyl group, n-nonyl group, 2,2-dimethylheptyl group, 2,6-dimethyl-4-heptyl group, 3,5,5-trimethylhexyl group, n-decyl group, n-undecyl group, 1-methyldecyl group, n-dodecyl group, n-tridecyl group, 1-hexylheptyl group, n-tetradecyl group, n-pentadecyl group, n-hexadecyl group, n-heptadecyl group, n-octadecyl group, and n-eicosyl group; and an alkyl group with 1 to 10 carbon atoms is preferable, and an alkyl group with 1 to 3 carbon atoms is more preferable. The alkyl group may be linear or branched.

As the alkoxy group with 1 to 20 carbon atoms, examples thereof include linear or branched alkoxy groups such as methoxy group, ethoxy group, n-propyloxy group, isopropyloxy group, n-butyloxy group, isobutyloxy group, n-pentyloxy group, isopentyloxy group, neopentyloxy group, n-hexyloxy group, 1-methylpentyloxy group, 4-methyl-2-pentyloxy group, 3,3-dimethylbutyloxy group, 2-ethylbutyloxy group, n-heptyloxy group, 1-methylhexyloxy group, n-octyloxy group, isooctyloxy group, 1-methylheptyloxy group, 2-ethylhexyloxy group, 2-propylpentyloxy group, n-nonyloxy group, 2,2-dimethylheptyloxy group, 2,6-dimethyl-4-heptyloxy group, 3,5,5-trimethylhexyloxy group, n-decyloxy group, n-undecyloxy group, 1-methyldecyloxy group, n-dodecyloxy group, n-tridecyloxy group, 1-hexylheptyloxy group, n-tetradecyloxy group, n-pentadecyloxy group, n-hexadecyloxy group, n-heptadecyloxy group, n-octadecyloxy group, and n-eicosyloxy group; and an alkoxy group with 1 to 10 carbon atoms is preferable, and an alkoxy group with 1 to 3 carbon atoms is more preferable. The alkoxy group may be linear or branched.

As the hydrocarbon group in R² and R³, examples thereof include: alkyl groups with 1 to 18 carbon atoms, preferably alkyl groups with 1 to 3 carbon atoms, such as a methyl group, an ethyl group, a n-propyl group, an isopropyl group, a n-butyl group, a sec-butyl group, a tert-butyl group, a 2-ethylhexyl group, a n-octyl group, and an isooctyl group; cycloalkyl groups with 3 to 18 carbon atoms, preferably cycloalkyl groups with 5 to 8 carbon atoms, such as a cyclopentyl group and a cyclohexyl group; alkenyl groups with 2 to 18 carbon atoms, preferably alkenyl groups with 2 to 5 carbon atoms, such as a vinyl group, an allyl group, a 3-butenyl group, and a 5-hexenyl group; and aryl groups with 6 to 18 carbon atoms, preferably aryl groups with 6 to 10 carbon atoms, such as a phenyl group, a naphthyl group, and an anthryl group.

The halogenated hydrocarbon group in R² and R³ is a group in which at least some of hydrogen atoms as a constituent of the above-mentioned hydrocarbon group are each substituted with a halogen atom. Examples of the halogen atom include fluorine atom, chlorine atom, bromine atom, and iodine atom.

R² and R³ are each preferably a hydrogen atom or a hydrocarbon group, and more preferably a hydrocarbon group.

As the group represented by -SiR¹₃, specific examples thereof include dimethylmethoxysilyl group, dimethylethoxysilyl group, methyldimethoxysilyl group, methyldiethoxysilyl group, trimethoxysilyl group, triethoxysilyl group, dimethylisopropoxysilyl group, methyldiisopropoxysilyl group, and triisopropoxysilyl group.

In terms of curability and mechanical properties, the polymer (A) has a group represented by the above-mentioned formula (1) and contains 500 ppm or more, preferably from 1,000 to 20,000 ppm, and more preferably from 1,500 to 10,000 ppm of silicon element. It should be noted that "ppm" means wtppm (ppm by weight). In one embodiment, the polymer (A) preferably has a group represented by the above-mentioned formula (1) at the molecular chain terminus of the polymer. Note that, the content of the silicon element derived from the group represented by the above-mentioned formula (1) in the polymer (A) can be calculated from the feed ratio, but can also be determined by inductively coupled plasma (ICP) emission spectrometry. Details will be described in the Examples section.

### <(Meth)acrylic acid alkyl ester (a1)>

The polymer (A) is a polymer of a polymerizable monomer component containing a (meth)acrylic acid alkyl ester (a1) (hereinafter also referred to as "monomer (a1)"). That is, the polymer (A) includes a structural unit derived from the monomer (a1).

Examples of the monomer (a1) include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, pentyl (meth)acrylate, hexyl (meth)acrylate, n-heptyl (meth)acrylate, 2-ethylhexyl (meth)acrylate, n-octyl (meth)acrylate, isooctyl (meth)acrylate, nonyl (meth)acrylate, isononyl (meth)acrylate, n-decyl (meth)acrylate, isodecyl (meth)acrylate, lauryl (meth)acrylate, n-tridecyl (meth)acrylate, isodecyl (meth)acrylate, n-myristyl (meth)acrylate, isomyristyl (meth)acrylate, n-pentadecyl (meth)acrylate, isopentadecyl (meth)acrylate, n-cetyl (meth)acrylate, isocetyl (meth)acrylate, n-heptadecyl (meth)acrylate, isoheptadecyl (meth)acrylate, n-stearyl (meth)acrylate, isostearyl (meth)acrylate, n-nonadecyl (meth)acrylate, isononadecyl (meth)acrylate, n-eicosyl (meth)acrylate, and isoeicosyl (meth)acrylate. The number of carbon atoms in the alkyl group of the monomer (a1) is not particularly limited, but the number of carbon atoms is preferably 4 or more and 22 or less, and the alkyl group may be linear or branched.

The monomers (a1) can be used singly or in combination of two or more kinds thereof.

The ratio of the monomer (a1) in the polymerizable monomer components as a constituent of the polymer (A) is preferably 20% by mass or more, more preferably from 30 to 99.9% by mass, still more preferably from 40 to 99.7% by mass, and particularly preferably from 50 to 99.5% by mass. When two or more kinds of the monomers (a1) are used, the total amount of the monomers (a1) is required to be within the above-mentioned range. The polymer (A) can include a structural unit derived from the monomer (a1) in an amount within the same range as described above in all the structural units. When the monomer (a1) is used in an amount within the above-mentioned range, there can be obtained a (meth)acrylic polymer excellent in mechanical properties.

### <Hydrolyzable silyl-group-containing (meth)acryloyl monomer (a2)>

The polymer (A) preferably further includes a structural unit that is copolymerizable with the monomer (a1) and derived from a hydrolyzable silyl group-containing (meth)acryloyl monomer (a2) (hereinafter also referred to as "monomer (a2)") having a group represented by the above-mentioned formula (1).

The monomer (a2) is preferably, for example, a compound represented by the following formula (a2-1).

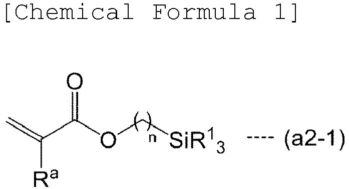

In the formula (a2-1), R^{a} is a hydrogen atom or a methyl group, n is an integer of 1 to 3, and R¹ has the same meaning as R¹ in the above-mentioned formula (1).

As the compound represented by the above-mentioned formula (a2-1), specific examples thereof include (meth)acryloxy group-containing silanes such as (meth)acryloxymethyldimethylmethoxysilane, (meth)acryloxymethyldimethylethoxysilane, ((meth)acryloxymethyl)methyldimethoxysilane, ((meth)acryloxymethyl)methyldiethoxysilane, (meth)acryloxymethyltrimethoxysilane, (meth)acryloxymethyltriethoxysilane, 3-(meth)acryloxypropyltrimethoxysilane, 3-(meth)acryloxypropylmethyldimethoxysilane, 3-(meth)acryloxypropyldimethylmethoxysilane, 3-(meth)acryloxypropyltriethoxysilane, 3-(meth)acryloxypropylmethyldiethoxysilane, and 3-(meth)acryloxypropyldimethylethoxysilane.

Examples of the monomer (a2) also include compounds obtained by adding an isocyanate group of a compound represented by OCN- (CH₂) -SiR¹₃ (n is an integer of 1 to 3, and R¹ has the same meaning as R¹ described in the above-mentioned formula (1).) to a hydroxy group of a hydroxyalkyl (meth)acrylate such as 2-hydroxyethyl (meth)acrylate or 4-hydroxybutyl (meth)acrylate, or to an amino group of an aminoalkyl (meth)acrylate such as 2-aminoethyl (meth)acrylate. Specific examples of the compound represented by OCN-(CH₂)ₙ-SiR¹₃ will be described later.

The monomers (a2) can be used singly or in combination of two or more kinds thereof.

The ratio of the monomer (a2) in the polymerizable monomer components as a constituent of the polymer (A) is preferably from 0.001 to 20% by mass, more preferably from 0.01 to 10% by mass, and still more preferably from 0.1 to 5% by mass. When two or more monomers (a2) are used, the total amount of the monomers (a2) is required to be within the above-mentioned range. The polymer (A) can include a structural unit derived from the monomer (a2) in an amount within the same range as described above in all the structural units. When the monomer (a2) is used in an amount within the above-mentioned range, the group represented by the above-mentioned formula (1) can be introduced into the polymer (A). Therefore, the resultant polymer (A) has appropriate degree of crosslinkability, and is suitable for use in forming a crosslinked body.

### <Other monomers (a3)>

The polymer (A) may further include a structural unit derived from another monomer (a3) other than the monomer (a1) and the monomer (a2) as long as the object of the present invention is not impaired.

Examples of the other monomer (a3) include:
alicyclic-hydrocarbon-group- or aromatic-hydrocarbon-group-containing (meth)acrylates such as cyclohexyl (meth)acrylate, isobornyl (meth)acrylate, benzyl (meth)acrylate, and phenyl (meth)acrylate;
alkoxyalkyl (meth)acrylates such as methoxymethyl (meth)acrylate, 2-methoxyethyl (meth)acrylate, 2-ethoxyethyl (meth)acrylate, 3-methoxypropyl (meth)acrylate, 3-ethoxypropyl (meth)acrylate, 4-methoxybutyl (meth)acrylate, and 4-ethoxybutyl (meth)acrylate;
polyalkylene glycol (meth)acrylates such as methoxy polyethylene glycol mono(meth)acrylate, ethoxy polyethylene glycol mono(meth)acrylate, octoxy polyethylene glycol mono(meth)acrylate, lauroxy polyethylene glycol mono(meth)acrylate, stearoxy polyethylene glycol mono(meth)acrylate, polyethylene glycol mono(meth)acrylate, and polypropylene glycol mono(meth)acrylate;
hydroxyalkyl (meth)acrylates such as 2-hydroxyethyl (meth)acrylate, 2-hydroxypropyl (meth)acrylate, and 4-hydroxybutyl (meth)acrylate;
carboxy group-containing monomers such as (meth)acrylic acid, itaconic acid, crotonic acid, fumaric acid, maleic acid; carboxy-group-containing (meth)acrylates such as β-carboxyethyl (meth)acrylate, 5-carboxypentyl (meth)acrylate, succinic acid mono(meth)acryloyloxyethyl ester, and ω-carboxypolycaprolactone mono(meth)acrylate;
acid anhydride group-containing monomers such as phthalic anhydride and maleic anhydride;
dialkylaminoalkyl (meth)acrylates such as 2-dimethylaminoethyl (meth)acrylate and 2-diethylaminoethyl (meth)acrylate;
amide group-containing monomers such as (meth)acrylamide; N-alkyl (meth)acrylamides such as N-methyl (meth)acrylamide, N-ethyl (meth)acrylamide, N-propyl (meth)acrylamide, and N-hexyl (meth)acrylamide; N,N-dialkyl (meth)acrylamides such as N,N-dimethyl (meth)acrylamide and N,N-diethyl (meth)acrylamide;
cyano group-containing monomers such as (meth)acrylonitrile;
nitrogen heterocycle-containing monomers such as N-vinylpyrrolidone, N-vinylmorpholine, N-vinylcaprolactam, (meth)acryloylmorpholine, N-cyclohexylmaleimide, N-phenylmaleimide, N-laurylmaleimide, and N-benzylmaleimide;
styrene derivatives such as styrene, α-methylstyrene, p-methylstyrene, p-chlorostyrene, p-chloromethylstyrene, p-methoxystyrene, p-tert-butoxystyrene, divinylbenzene, and indene; and
vinyl ester compounds such as vinyl acetate, vinyl propionate, vinyl butyrate, vinyl caproate, vinyl benzoate, and vinyl cinnamate. Among them, polyalkylene glycol (meth)acrylate is preferable.

The other monomers (a3) can be used singly or in combination of two or more kinds thereof.

When the other monomer (a3) is used, the ratio of the other monomer (a3) in the polymerizable monomer components as a constituent of the polymer (A) is preferably from 1 to 65% by mass, and more preferably from 5 to 60% by mass. When two or more monomers (a3) are used, the total amount of the monomers (a3) is required to be within the above-mentioned range. The polymer (A) can include structural units derived from other monomers (a3) in an amount within the same range as described above in all the structural units.

### <Mercapto group-containing compound (d)>

In the production of the polymer (A), a mercapto group-containing compound (d) (hereinafter also referred to as "compound (d)") may be used as a chain transfer agent.

The compound (d) includes a functional group (-SH) having high chain-transfer activity in radical polymerization thereby acting as a chain transfer agent, and can introduce the group represented by the above-mentioned formula (1) into the molecular chain terminus of the polymer when a mercapto group-containing compound having a group represented by the above-mentioned formula (1) is particularly used in polymerization of a polymerizable monomer component in the presence of the compound (d). Alternatively, the group represented by the above-mentioned formula (1) can also be introduced into the polymer by an ene-thiol reaction in which a mercapto group-containing compound having a group represented by the above-mentioned formula (1) is introduced into a polymer having a polymerizable unsaturated group. The curable composition obtained by using the polymer (A) having a group represented by the above-mentioned formula (1) at its molecular chain terminus tends to be excellent in curing speed and mechanical properties.

Note that, when using the monomer (a2), the group represented by the above-mentioned formula (1) in the monomer (a2) and the group represented by the above-mentioned formula (1) in the mercapto group-containing compound (d) may be the same or different.

The mercapto group-containing compound (d) is preferably a compound represented by formula (d-1).

Formula (d-1): HS-(CH₂)ₙ-SiR¹₃

In the formula (d-1), n is an integer of 1 to 3, and R¹ has the same meaning as R¹ in formula (1).

As the compound represented by the above-mentioned formula (d-1), specific examples thereof include mercaptomethyldimethylmethoxysilane, mercaptomethyldimethylethoxysilane, mercaptomethyldimethylisopropoxysilane, mercaptomethylmethyldimethoxysilane, mercaptomethylmethyldiethoxysilane, mercaptomethylmethyldiisopropoxysilane, mercaptomethyltrimethoxysilane, mercaptomethyltriethoxysilane, mercaptomethyltriisopropoxysilane, 3-mercaptopropyltrimethoxysilane, 3-mercaptopropylmethyldimethoxysilane, and 3-mercaptopropyldimethylmethoxysilane. Among them, mercaptomethyldimethylmethoxysilane, mercaptomethylmethyldimethoxysilane, mercaptomethyltrimethoxysilane, mercaptomethyltriethoxysilane, 3-mercaptopropyltrimethoxysilane, and 3-mercaptopropylmethyldimethoxysilane are preferable. When the compound represented by formula (d-1) is used, the group represented by the above-mentioned formula (1) can be introduced into the molecular chain terminus of the polymer (A) .

As the mercapto group-containing compound (d) other than the compound represented by the above-mentioned formula (d-1), examples thereof include mercapto group-containing compounds such as n-octyl mercaptan, n-dodecyl mercaptan, tert-dodecyl mercaptan, and lauryl mercaptan.

The compound (d) can be used singly or in combination of two or more kinds thereof.

The compound (d) is preferably used in an amount ranging from 0.01 to 10 parts by mass, more preferably from 0.1 to 6 parts by mass with respect to 100 parts by mass of the sum of the polymerizable monomer components. When two or more kinds of the compounds (d) are used, the total amount of the compounds (d) is required to be within the above-mentioned range. By using the compound (d) in an amount within the above-mentioned range, the number average molecular weight of the polymer (A) can be adjusted to an appropriate range.

### <Production of polymer (A)>

The polymer (A) can be produced by various known polymerization methods, and the methods are not particularly limited, but for example, the polymer (A) is preferably obtained by the following methods. Note that any combination of the methods (i) to (iv) can be made.

(i) A method of copolymerizing a monomer (a2) having a polymerizable unsaturated group and a group represented by the above-mentioned formula (1) with a monomer (a1) having a (meth)acrylic structure as described above.
(ii) A method of polymerizing a monomer (a1) having a (meth)acrylic structure in the presence of a mercapto group-containing compound (d) having a group represented by the above-mentioned formula (1), as a chain transfer agent.
(iii) A method of reacting a polymer having a reactive functional group, which is obtained by copolymerizing a compound having a polymerizable unsaturated group and a reactive functional group (for example, a hydroxy group, an isocyanate group, or an amino group) and a monomer component containing a monomer (a1), with a compound (e) having a group that undergoes an addition reaction with the reactive functional group and being capable of introducing a group represented by the above-mentioned formula (1) into the polymer by an addition reaction.

Examples of the compound (e) include compounds represented by the following formulae (e-1) and (e-2) (hereinafter also referred to as "compound (e-1)" and "compound (e-2)", respectively).

Formula (e-1): OCN-(CH₂)ₙ-SiR¹₃

In the formula (e-1), n is an integer of 1 to 3, and R¹ has the same meaning as R¹ in the above-mentioned formula (1) .

Specific examples of the compound (e-1) include 1-isocyanate methyldimethylmethoxysilane, 1-isocyanate methyldimethylethoxysilane, 1-isocyanate methyldimethylisopropoxysilane, (1-isocyanate methyl)methyldimethoxysilane, (1-isocyanate methyl)methyldiethoxysilane, (1-isocyanate methyl)methyldiisopropoxysilane, 1-isocyanate methyltrimethoxysilane, 1-isocyanate methyltriethoxysilane, 1-isocyanate methyltriisopropoxysilane, 3-isocyanate propyltrimethoxysilane, 3-isocyanate propylmethyldimethoxysilane, and 3-isocyanate propyldimethylmethoxysilane. Among them, 1-isocyanate methyldimethylmethoxysilane, (1-isocyanate methyl)methyldimethoxysilane, 1-isocyanate methyltrimethoxysilane, 1-isocyanate methyltriethoxysilane, 3-isocyanate propyltrimethoxysilane, and 3-isocyanate propylmethyldimethoxysilane are preferable.

Formula (e-2) : R⁴-(CH₂)ₙ-SiR¹₃

In the formula (e-2), n is an integer of 1 to 3, R¹ has the same meaning as R¹ in the above-mentioned formula (1), and R⁴ is a glycidyloxy group, an amino group, an alkylamino group, an (aminoalkyl)amino group, an (N,N-dialkylaminoalkyl)amino group, or a halogenated hydrocarbon group.

Specific examples of the compound (e-2) include aminomethyltrimethoxysilane, aminomethyltriethoxysilane, (aminoethylamino)methyltrimethoxysilane, (N,N-dimethylamino)ethylaminomethyltrimethoxysilane, glycidyloxymethyltrimethoxysilane, 3-aminopropyltrimethoxysilane, 3-aminopropylmethyldimethoxysilane, 3-aminopropyltriethoxysilane, N-2-(aminoethyl)-3-aminopropyltrimethoxysilane, 3-triethoxysilyl-N-(1,3-dimethyl-butylidene)propylamine, and N-phenyl-3-aminopropyltrimethoxysilane.

The compound (e) can be used singly or in combination of two or more kinds thereof.

The compound (e) is preferably used in an amount of 0.1 to 5 parts by mass, more preferably from 0.2 to 3 parts by mass with respect to 100 parts by mass of the sum of the polymerizable monomer components. When two or more kinds of the compounds (e) are used, the total amount of the compounds (e) is required to be within the above-mentioned range.

(iv) A method in which a monomer (a1) is polymerized by a living polymerization method and a functional group such as an alkenyl group or a hydroxy group is introduced into a molecular chain terminus, and then the resultant polymer is allowed to react with, for example, the compound (d) or the compound (e).

The polymer (A) can be produced by using a known polymerization method such as cationic polymerization, anionic polymerization, or radical polymerization as in the above-described methods (i) to (iv), and the method is not particularly limited, but a radical polymerization method is preferable in terms of versatility of the monomer and industrial productivity. Examples of the radical polymerization method include: living radical polymerization method capable of introducing a specific functional group (for example, a group represented by the above-mentioned formula (1)) into a controlled position such as termini; and free radical polymerization method using a polymerization initiator to copolymerize predetermined monomer units.

As the living polymerization, a living cationic polymerization method, a living anionic polymerization method, or a living radical polymerization method can be applied, but a living radical polymerization method is preferable in terms of industrial productivity. As the living radical polymerization method, examples that may be used include atom transfer radical polymerization method (ATRP), reversible addition-fragmentation chain transfer (RAFT) polymerization method, nitroxide mediated polymerization method (NMP), organotellurium compound mediated polymerization method (TERP), and iodine compound mediated polymerization method (IRP), and a polymer having a functional group at its terminus is obtained by appropriately selecting reaction conditions.

As the free radical polymerization method, for example, a polymerizable monomer component and, if necessary, a mercapto group-containing compound (d) are put into a reaction vessel, a polymerization initiator is added thereto, and the mixture is allowed to react at a reaction temperature of about 40 to 90°C for 2 to 20 hours. In the reaction, a polymerization solvent may be added, as necessary. For example, the polymerization is carried out under an inert gas atmosphere such as nitrogen gas. Note that, a polymerizable monomer component, a polymerization initiator, a chain transfer agent, and a polymerization solvent may be appropriately added additionally during the polymerization reaction.

Examples of the polymerization initiator include azo-compound type polymerization initiator, peroxide type polymerization initiator, and photoradical polymerization initiator. Note that, it is more preferable not to use a metal catalyst. Since a metal component derived from a catalyst is not contained in the polymer (A), the polymer (A) produced by using such a polymerization initiator can prevent from occurring for example, inhibition of crosslinking reaction or coloring. Moreover, depolymerization reaction due to a metal component can be suppressed, thereby enabling to provide a cured product excellent in durability in use in various applications.

Examples of the azo-compound type polymerization initiator include 2,2'-azobisisobutyronitrile, 2,2'-azobis(4-methoxy-2,4-dimethylvaleronitrile), 2,2'-azobis(2-cyclopropylpropionitrile), 2,2'-azobis(2,4-dimethylvaleronitrile), 2,2'-azobis(2-methylbutyronitrile), 1,1'-azobis(cyclohexane-1-carbonitrile), 2-(carbamoylazo)isobutyronitrile, 2-phenylazo-4-methoxy-2,4-dimethylvaleronitrile, 2,2'-azobis(2-amidinopropane)dihydrochloride, 2,2'-azobis(N,N'-dimethylene isobutyramidine), 2,2'-azobis[2-methyl-N-(2-hydroxyethyl)-propionamide], 2,2'-azobis(isobutyramide)dihydrate, 4,4'-azobis(4-cyanopentanoic acid), 2,2'-azobis(2-cyanopropanol), dimethyl-2,2'-azobis(2-methylpropionate), and 2,2'-azobis[2-methyl-N-(2-hydroxyethyl)propionamide].

Examples of the peroxide type polymerization initiator include tert-butyl hydroperoxide, cumene hydroxide, dicumyl peroxide, benzoyl peroxide, lauroyl peroxide, caproyl peroxide, di-isopropyl peroxydicarbonate, di-2-ethylhexyl peroxydicarbonate, tert-butyl peroxypivalate, 2,2-bis(4,4-di-tert-butylperoxycyclohexyl) propane, 2,2-bis(4,4-di-tert-amylperoxycyclohexyl) propane, 2,2-bis(4,4-di-tert-octylperoxycyclohexyl) propane, 2,2-bis(4,4-di-α-cumylperoxycyclohexyl) propane, 2,2-bis(4,4-di-tert-butylperoxycyclohexyl) butane, and 2,2-bis(4,4-di-tert-octylperoxycyclohexyl) butane.

As the photoradical polymerization initiator, a compound conventionally used as a photoradical polymerization initiator is preferable, and examples thereof include: benzoin initiators such as benzoin, benzoin methyl ether, benzoin ethyl ether and benzoin propyl ether; acetophenone initiators such as acetophenone, 2,2-dimethoxy-2-phenylacetophenone, 2,2-diethoxy-2-phenylacetophenone, 1,1-dichloroacetophenone, 2-hydroxy-2-methyl-1-phenyl-propane-1-one, 1-hydroxycyclohexyl phenyl ketone, 2-methyl-1-[4-(methylthio)phenyl]-2-morpholino-propane-1-one, and N,N-dimethylaminoacetophenone; anthraquinone initiators such as 2-methylanthraquinone, 1-chloroanthraquinone, and 2-amylanthraquinone; thioxanthone initiators such as 2,4-dimethylthioxanthone, 2,4-diethylthioxanthone, 2-chlorothioxanthone, 2,4-dichlorothioxanthone, 2-isopropylthioxanthone, and 2,4-diisopropylthioxanthone; ketal initiators such as acetophenone dimethyl ketal and benzyl methyl ketal; benzophenone initiators such as benzophenone, methylbenzophenone, 4-phenylbenzophenone, 2,4,6-trimethylbenzophenone, 4,4'-dichlorobenzophenone, 4,4'-bisdiethylaminobenzophenone, Michler's ketone, and 4-benzoyl-4'-methyldiphenylsulfide; acylphosphine-oxide initiators such as 2,4,6-trimethylbenzoyl diphenylphosphine oxide, bis(2,6-dimethoxybenzoyl)-2,4,4'-trimethylpentylphosphine oxide, and bis(2,4,6-trimethylbenzoyl)phenylphosphine oxide; oxime-ester initiator such as 1-[4-(phenylthio)phenyl]octane-1,2-dione=2-(O-benzoyloxime); camphorquinone and α-hydroxyketone.

The photoradical polymerization initiator may be used in combination with a sensitizer. As the sensitizer, for example, an anthracene compound such as 9,10-dibutoxyanthracene or 9,10-bis(acyloxy)anthracene is preferable.

The polymerization initiators can be used singly or in combination of two or more kinds thereof.

The polymerization initiator may be used by sequential addition over multiple times.

The amount of the polymerization initiator used is preferably from 0.001 to 2 parts by mass, and more preferably from 0.002 to 1 part by mass with respect to 100 parts by mass of the polymerizable monomer component. When two or more kinds of the polymerization initiators are used, the total amount of the polymerization initiators is required to be within the above-mentioned range. By using the polymerization initiator in an amount within the above-mentioned range, the number average molecular weight of the polymer (A) can be adjusted within an appropriate range.

The polymerization solvent is preferably an organic solvent. Examples of the organic solvent include: aromatic hydrocarbons such as benzene, toluene, and xylene; aliphatic hydrocarbons such as n-pentane, n-hexane, n-heptane, and n-octane; cycloaliphatic hydrocarbons such as cyclopentane, cyclohexane, cycloheptane, and cyclooctane; ethers such as diethyl ether, diisopropyl ether, 1,2-dimethoxyethane, dibutyl ether, tetrahydrofuran, dioxane, anisole, phenylethyl ether, and diphenyl ether; halogenated hydrocarbons such as chloroform, carbon tetrachloride, 1,2-dichloroethane, and chlorobenzene; esters such as ethyl acetate, propyl acetate, butyl acetate, and methyl propionate; ketones such as acetone, acetylacetone, methyl ethyl ketone, diethyl ketone, methyl isobutyl ketone, and cyclohexanone; amides such as N,N-dimethylformamide, N,N-dimethylacetamide, and N-methylpyrrolidone; nitriles such as acetonitrile and benzonitrile; and sulfoxides such as dimethyl sulfoxide and sulfolane.

The polymerization solvents can be used singly or in combination of two or more kinds thereof.

Note that, polymerization can also be carried out in the presence of a below-mentioned plasticizer or a polymer (B) .

### <Physical properties of polymer (A)>

The number average molecular weight (Mn) of the polymer (A) is preferably more than 1,000, more preferably 5,000 or more, and still more preferably 10,000 or more in terms of the viscosity of the polymer and the mechanical properties of the resultant cured product, and is preferably 100,000 or less, more preferably 50,000 or less, and still more preferably 40,000 or less in terms of the viscosity of the polymer.

The number average molecular weight (Mn) is measured by gel permeation chromatography (GPC).

The glass transition temperature (Tg) of the polymer (A) is preferably from -80 to 100°C, and more preferably from -75 to 80°C. The Tg is determined by differential scanning calorimetry (DSC).

Details of the measurement conditions of GPC and DSC will be described in the Examples section described later.

### <Content of polymer (A)>

The composition of one embodiment of the present invention can contain one or more kinds of polymers (A).

The composition of one embodiment of the present invention preferably contains the polymer (A) in an amount of 1 part by mass or more, more preferably from 1 to 90 parts by mass, and still more preferably from 10 to 80 parts by mass based on 100 parts by mass of the sum of the polymer (A) and the polymer (B). When two or more kinds of the polymers (A) are used, the total content thereof is required to be within the above-mentioned range. When the polymer (A) is contained in an amount within the above-mentioned range, a composition excellent in pressure sensitive adhesion/adhesion properties is obtained.

### [Polymer (B)]

A composition of one embodiment of the present invention contains a polymer (B) having a radiation-reactive group (hereinafter also referred to as "polymer (B)").

In the polymer having a radiation-reactive group, a crosslinked structure is formed by a reaction such as a radical reaction or a photodimerization reaction. In the radical reaction, by delivery of radiation, radicals are generated on a radiation-reactive group that is bonded as a side chain (pendant group) to a main chain polymer, and graft reaction onto another polymer takes place to form a crosslinked structure between the polymers. In the photodimerization reaction, light causes dimerization reaction of radiation-reactive groups (photosensitive groups) whereby heterocyclic rings consisting of carbon atoms are formed and crosslinked.

The radiation-reactive group refers to a functional group through which polymers are crosslinked by delivery of radiation. Examples of the radiation include microwave, infrared ray, ultraviolet ray, electron beam, α ray, β ray, γ ray, and neutron ray.

As the radiation-reactive group promoting the radical polymerization reaction as the main reaction, examples that can be mentioned include functional groups having a benzophenone skeleton, functional groups having a benzyl skeleton, functional groups having an o-benzoylbenzoic acid ester skeleton, functional groups having a thioxanthone skeleton, functional groups having a 3-ketocoumarin skeleton, functional groups having a 2-ethylanthraquinone skeleton, and functional groups having a camphorquinone skeleton.

As the radiation-reactive group promoting the photodimerization reaction as the main reaction, functional groups having an unsaturated bond capable of photodimerization can be used, and examples thereof include cinnamyl group, cinnamoyl group, cinnamylidene group, cinnamylideneacetyl group, chalcone group, coumarin group, isocoumarin group, 2,5-dimethoxystilbene group, maleimide group, α-phenylmaleimide group, 2-pyrone group, azide group, thymine group, quinone group, uracil group, pyrimidine group, stilbazolium group, styrylpyridinium group, and styrylquinolium group.

As the radiation-reactive group in one embodiment of the present invention, a functional group having a benzophenone skeleton, for example, a benzophenone group is preferable.

Examples of the main chain polymer include acrylic polymer, vinyl-alcohol polymer, and ether polymer, and the main chain polymer is preferably an acrylic polymer. The acrylic polymer is a polymer or copolymer of an acrylic monomer. Examples of the acrylic monomer include alkyl (meth)acrylates such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, and lauryl (meth) methacrylate, and the alkyl (meth)acrylate having an alkyl group with 1 to 8 carbon atoms is preferably contained. The alkyl (meth)acrylate having an alkyl group with 1 to 8 carbon atoms is preferably 2-ethylhexyl (meth)acrylate, methyl (meth)acrylate, or butyl (meth)acrylate. The acrylic monomers can be used singly or in combination of two or more kinds thereof.

The polymer (B) may be produced by a general-purpose method in which a benzophenone group is introduced into a side chain of an acrylic polymer, or may be produced by polymerizing a monomer mixture containing an acrylic monomer and a vinyl monomer that is copolymerizable with the acrylic monomer and has a benzophenone group.

The content of the benzophenone group introduced into the acrylic polymer is preferably from 0.1 to 5% by mass with respect to the total mass of the acrylic polymer having a radiation-reactive group in terms of enabling to obtain a radiation-curable hot-melt pressure sensitive adhesive having a long pot life and excellent pressure sensitive adhesion.

The vinyl monomer that is copolymerizable with the acrylic monomer and has a radiation-reactive group is not particularly limited, but an acrylic monomer having a benzophenone group is preferable. As the acrylic monomer having a benzophenone group, examples thereof include 4-acryloyloxybenzophenone, 4-acryloyloxyethoxybenzophenone, 4-acryloyloxy-4'-methoxybenzophenone, 4-acryloyloxyethoxy-4'-methoxybenzophenone, 4-acryloyloxy-4'-bromobenzophenone, 4-acryloyloxyethoxy-4'-bromobenzophenone, 4-methacryloyloxybenzophenone, 4-methacryloyloxyethoxybenzophenone, 4-methacryloyloxy-4'-methoxybenzophenone, 4-methacryloyloxyethoxy-4'-methoxybenzophenone, 4-methacryloyloxy-4'-bromobenzophenone, and 4-methacryloyloxyethoxy-4'-bromobenzophenone. The acrylic monomers having a benzophenone group may be used singly or two or more kinds thereof in combination.

The polymer (B) preferably includes an acrylic polymer as its main chain polymer as described above, and examples of commercially available products thereof include a product from BASF SE with a trade name "acResin (registered trademark) UV". As commercially available products of acrylic polymers in which the main chain is an acrylic polymer containing a 2-ethylhexyl acrylate component and a benzophenone group is bonded thereto as a side chain, examples thereof include products from BASF SE with trade names "acResin (registered trademark) A203 UV" and "acResin (registered trademark) A204 UV". As commercially available products of acrylic polymers in which the main chain is an acrylic polymer containing a butyl acrylate component and a radiation-reactive group is bonded thereto as a side chain, examples thereof include products from BASF SE with trade names "acResin (registered trademark) A258 UV" and "acResin (registered trademark) A 260 UV". As commercially available products of acrylic polymers in which the main chain is an acrylic polymer containing a 2-ethylhexyl acrylate component and a methyl methacrylate component and a benzophenone group is bonded thereto as a side chain, examples thereof include a product from BASF SE with a trade name "acResin (registered trademark) 3532 UV". As commercially available products of other acrylic polymers having a radiation-reactive group, examples thereof include a product from BASF SE with a trade name "acResin (registered trademark) DS3552X UV".

The number average molecular weight (Mn) of the polymer (B) is from 10,000 to 1,000,000, preferably from 20,000 to 500,000, and more preferably from 25,000 to 300,000. The polymer (B) having a number average molecular weight within the above-mentioned range is preferable in view of that the polymer (B) is excellent in compatibility with the polymer (A), handleability of the curable composition, and pressure sensitive adhesion/adhesion properties. The number average molecular weight (Mn) is determined by a GPC method.

Note that, the number average molecular weight of the (meth)acrylic polymer (A) is preferably smaller than the number average molecular weight of the polymer (B) in terms of compatibility and curability.

The composition of one embodiment of the present invention can contain one or more kinds of polymers (B).

The composition of one embodiment of the present invention preferably contains the polymer (B) in an amount of 99 parts by mass or less, more preferably from 10 to 99 parts by mass, and still more preferably from 20 to 90 parts by mass based on 100 parts by mass of the total amount of the polymer (A) and the polymer (B). When two or more kinds of the polymers (B) are used, the total content thereof is required to be within the above-mentioned range. When the polymer (B) is contained in an amount within the above-mentioned range, a composition excellent in viscosity and pressure sensitive adhesion/adhesion properties is obtained.

### [Xylene resin (C)]

The composition of one embodiment of the present invention contains a xylene resin (C).

Specific examples of the xylene resin (C) include: NIKANOL Y-50 (Xylene resin, liquid), NIKANOL L (Xylene resin, liquid), NIKANOL H (Xylene resin, liquid), NIKANOL G (Xylene resin, liquid), NIKANOL GHP-150 (Alkylphenol-modified xylene resin, softening point: 150 to 160°C), NIKANOL HP-120 (Alkylphenol-modified xylene resin, softening point: 125 to 135°C), NIKANOL HP-100 (Alkylphenol-modified xylene resin, softening point: 105 to 125°C), NIKANOL HP-210 (Alkylphenol-modified xylene resin, softening point: 90 to 110°C), and NIKANOL HP-70 (Alkylphenol-modified xylene resin, softening point: 70 to 90°C) manufactured by Fudow Company Limited; and Lignol R-70 (Rosin-modified xylene resin, softening point: 75 to 85°C) and Lignol R-140 (Rosin-modified xylene resin, softening point: 128 to 135°C) manufactured by LIGNYTE CO.,LTD. Among them, an alkylphenol-modified xylene resin is preferable, and in particular, NIKANOL HP-100 or NIKANOL HP-210 is preferable.

In terms of the storage stability of the curable composition, a xylene resin having an acid value of 1 mgKOH/g or less is preferable, and a xylene resin having an acid value of 0.1 mgKOH/g or less is particularly preferable.

Note that, the acid value refers to milligrams of potassium hydroxide required to neutralize 1 g of xylene resin, and can be measured according to JIS K 0070. Details of the conditions for measuring the acid value of the xylene resin are described in the Examples section described later.

The composition of one embodiment of the present invention can contain one or more kinds of xylene resins (C).

The content of the xylene resin (C) in the composition of one embodiment of the present invention is preferably from 10 to 1,000 parts by mass, and more preferably from 50 to 800 parts by mass with respect to 100 parts by mass of the sum of the polymer (A) and the polymer (B). When two or more kinds of xylene resins (C) are used, the total content thereof is required to be within the above-mentioned range. When the content of the xylene resin (C) is within the above-mentioned range, the adhesive layer has appropriate tackiness, and is excellent in adhesion force to various adherends.

### [Curing catalyst (D)]

The composition of one embodiment of the present invention preferably further contains a curing catalyst (D). As the curing catalyst (D), there can be used conventionally known various condensation catalysts used for polymers having a crosslinkable silyl group. However, the curing catalyst (D) used in the present invention is preferably a non-tin curing catalyst.

Examples of the curing catalyst (D) include:
zinc carboxylates such as zinc naphthenate, zinc stearate, zinc-2-ethyloctoate, zinc-2-ethylhexanoate, and zinc acetylacetonate;
titanate esters such as tetrabutyl titanate, tetrapropyl titanate, tetra(2-ethylhexyl)titanate, and isopropoxytitanium bis(ethylacetoacetate);
organic aluminum compounds such as aluminum trisacetylacetonate, aluminum trisethylacetoacetate, and di-isopropoxyaluminum ethylacetoacetate;
metal salts of carboxylic acids (such as 2-ethylhexanoic acid, neodecanoic acid, versatic acid, oleic acid, or naphthenic acid) such as bismuth carboxylate, iron carboxylate, titanium carboxylate, lead carboxylate, vanadium carboxylate, zirconium carboxylate, calcium carboxylate, potassium carboxylate, barium carboxylate, manganese carboxylate, cerium carboxylate, nickel carboxylate, cobalt carboxylate, zinc carboxylate, and aluminum carboxylate, or reaction products thereof with a below-mentioned amine compound such as laurylamine, and mixtures thereof;
chelate compounds such as zirconium tetraacetylacetonate, zirconium tributoxyacetylacetonate, dibutoxyzirconium diacetylacetonate, zirconium acetylacetonate bis(ethylacetoacetate), and titanium tetraacetylacetonate;
aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dioctylamine, di(2-ethylhexyl)amine, didecylamine, dilaurylamine, dicetylamine, distearylamine, methylstearylamine, ethylstearylamine, and butylstearylamine;
aliphatic tertiary amines such as triamylamine, trihexylamine, and trioctylamine;
aliphatic unsaturated amines such as triallylamine and oleylamine;
aromatic amines such as lauryl aniline, stearyl aniline, and triphenylamine; and as other amines, amine compounds such as monoethanolamine, diethanolamine, triethanolamine, diethylenetriamine, triethylenetetramine, oleylamine, cyclohexylamine, benzylamine, diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, and 1,8-diazabicyclo(5,4,0)undecene-7 (DBU), and salts of these amine compounds with, for example, carboxylic acids;
low molecular weight polyamide resins obtained from excess polyamine and polybasic acid;
reaction products of excess polyamine with epoxy compound; and
known silanol condensation catalysts including other acidic catalysts (such as fatty acids (for example, ferzatic acid) and organic acid phosphate compounds) and basic catalysts.

The curing catalyst (D) can be used singly or in combination of two or more kinds thereof.

In one embodiment of the present invention, when the curing catalyst (D) is contained, the content thereof is preferably from 0.1 to 30 parts by mass, and more preferably from 0.5 to 10 parts by mass with respect to 100 parts by mass of the sum of the polymer (A) and the polymer (B), in terms of the moisture curing rate of the curable composition. When two or more curing catalysts (D) are used, the total content thereof is required to be within the above-mentioned range.

### [Other components]

The composition of one embodiment of the present invention may contain, in addition to the polymer (A), one or two or more other components such as a photosensitizer, a plasticizer, a filler, silica, a pigment, an anti-aging agent, a dehydrating agent, a silane coupling agent having an amino group, a tackifier resin other than xylene resins, a dispersant, a rheology control agent, an antifoaming agent, and an adhesion-imparting agent, as necessary.

### <Photosensitizer>

The composition of one embodiment of the present invention can further contain a photosensitizer. By using the photosensitizer, the radiation-reactive group in the polymer (B) is sensitized.

Examples of the photosensitizer include aromatic nitro compounds, coumarins (7-diethylamino-4-methylcoumarin, 7-hydroxy-4-methylcoumarin, ketocoumarin, carbonyl biscoumarin), aromatic 2-hydroxyketones, and amino-substituted aromatic 2-hydroxyketones (2-hydroxybenzophenone, mono- or di-p-(dimethylamino)-2-hydroxybenzophenone), acetophenone, anthraquinone, xanthone, thioxanthone, 2-chlorothioxanthone, 2-methylthioxanthone, 2,4-diethylthioxanthone, 2-isopropylthioxanthone, benzanthrone, thiazolines (2-benzoylmethylene-3-methyl-β-naphthothiazoline, 2-(β-naphthoylmethylene)-3-methylbenzothiazoline, 2-(α-naphthoylmethylene)-3-methylbenzothiazoline, 2-(4-biphenoylmethylene)-3-methylbenzothiazoline, 2-(β-naphthoylmethylene)-3-methyl-β-naphthothiazoline, 2-(4-biphenoylmethylene)-3-methyl-β-naphthothiazoline, 2-(p-fluorobenzoylmethylene)-3-methyl-β-naphthothiazoline), oxazolines (2-benzoylmethylene-3-methyl-β-naphthoxazoline, 2-(β-naphthoylmethylene)-3-methylbenzoxazoline, 2-(α-naphthoylmethylene)-3-methylbenzoxazoline, 2-(4-biphenoylmethylene)-3-methylbenzoxazoline, 2-(β-naphthoylmethylene)-3-methyl-β-naphthoxazoline, 2-(4-biphenoylmethylene)-3-methyl-β-naphthoxazoline, 2-(p-fluorobenzoylmethylene)-3-methyl-β-naphthoxazoline), benzothiazole, nitroanilines (m- or p-nitroaniline, 2,4,6-trinitroaniline) or nitroacenaphthene (5-nitroacenaphthene), (2-[(m-hydroxy-p-methoxy)styryl] benzothiazole, benzoin alkyl ether, N-alkylated phthalone, acetophenone ketal (2,2-dimethoxyphenylethanone), naphthalene, 2-naphthalene methanol, 2-naphthalene carboxylic acid, anthracene, 9-anthracene methanol, 9-anthracene carboxylic acid, 9,10-diphenylanthracene, 9,10-bis(phenylethynyl)anthracene, 2-methoxyanthracene, 1,5-dimethoxyanthracene, 1,8-dimethoxyanthracene, 9,10-diethoxyanthracene, 9,10-dibutoxyanthracene, 6-chloroanthracene, 1,5-dichloroanthracene, 5,12-bis(phenylethynyl)naphthacene, chrysene, pyrene, benzopyran, azoindolizine, furocoumarin, phenothiazine, benzo[c]phenothiazine, 7-H-benzo[c]phenothiazine, triphenylene, 1,3-dicyanobenzene, and phenyl-3-cyanobenzoate.

The photosensitizers can be used singly or in combination of two or more kinds thereof.

In one embodiment of the present invention, the content of the photosensitizer is preferably from 0.1 to 20 parts by mass, and more preferably from 0.5 to 10 parts by mass with respect to 100 parts by mass of the sum of the polymer (A) and the polymer (B), in terms of curability of the curable composition. When two or more kinds of the photosensitizers are used, the total content thereof is required to be within the above-mentioned range.

### <Plasticizer>

The composition of one embodiment of the present invention may further contain a plasticizer. By using the plasticizer, the cured product that is formed from the curable composition can be improved in flexibility and stretchability.

Examples of the plasticizer include: phthalic acid esters such as dimethyl phthalate, diethyl phthalate, dibutyl phthalate, diisobutyl phthalate, dioctyl phthalate, diisodecyl phthalate, butyl benzyl phthalate, and diisononyl phthalate; non-phthalic acid esters such as 1,2-cyclohexanedicarboxylic acid diisononyl ester and trioctyl trimellitate; aliphatic carboxylic acid esters such as dioctyl adipate, diisodecyl succinate, dibutyl sebacate, and butyl oleate; alcohol esters such as diethylene glycol dibenzoate, triethylene glycol dibenzoate, and pentaerythritol ester; phosphoric acid esters such as trioctyl phosphate and tricresyl phosphate; epoxy plasticizers such as epoxidized soybean oil, dioctyl 4,5-epoxyhexahydrophthalate, and benzyl epoxystearate; chlorinated paraffin; hydrocarbons such as normal paraffin and isoparaffin; polyethers such as polyethylene glycol or derivatives thereof, or of polypropylene glycol or derivatives thereof (for example, products in which hydroxyl groups of polyethylene glycol or of polypropylene glycol are capped with alkyl ethers), oligomers of polystyrene such as poly-α-methylstyrene and polystyrene, oligomers such as polybutadiene, butadiene-acrylonitrile copolymers, polychloroprene, polyisoprene, polybutene, hydrogenated polybutene, and epoxidized polybutadiene, and polymer plasticizers such as (meth)acrylic polymers other than the polymer (A).

The plasticizers can be used can be used singly or in combination of two or more kinds thereof.

In one embodiment of the present invention, the content of the plasticizer is preferably from 1 to 300 parts by mass and more preferably from 5 to 100 parts by mass with respect to 100 parts by mass of the sum of the polymer (A) and the polymer (B), in terms of the coatability of the curable composition and the weatherability of the cured product. When two or more kinds of the plasticizers are used, the total content thereof is required to be within the above-mentioned range.

### <Filler>

The composition of one embodiment of the present invention can further contain a filler.

Examples of the filler include: calcium carbonates such as heavy calcium carbonate, light calcium carbonate, colloidal calcium carbonate, semi-colloidal calcium carbonate, ultrafine calcium carbonate, and products obtained by surface-treating the surface of these calcium carbonates with a fatty acid or a resin acid organic substance; carbon black; magnesium carbonate; diatomaceous earth; calcined clay; clay; talc; titanium oxide; bentonite; ferric oxide; zinc oxide; active zinc oxide; aluminum hydroxide; inorganic hollow bodies such as Shirasu-balloons, pearlite, glass balloons, fly ash balloons, alumina balloons, zirconia balloons, and carbon balloons; organic resin hollow bodies (plastic balloons) such as phenol resin balloons, epoxy resin balloons, urea resin balloons, polyvinylidene chloride resin balloons, polyvinylidene chloride-(meth)acrylic resin balloons, polystyrene balloons, polymethacrylate balloons, polyvinyl alcohol balloons, styrene-(meth)acrylic resin balloons, and polyacrylonitrile balloons; powdery fillers such as resin beads, wood flour, pulp, cotton chips, mica, walnut flour, rice flour, graphite, aluminum fine powder, and flint powder; fibrous fillers such as glass fibers, glass filaments, carbon fibers, Kevlar fibers, and polyethylene fibers. Among them, calcium carbonate whose surface is treated with, for example, a fatty acid is preferable in terms of dispersibility, and plastic balloons such as polystyrene balloons are preferable in terms of reducing specific gravity and providing heat insulating properties.

The fillers can be used singly or in combination of two or more kinds thereof.

In one embodiment of the present invention, the content of the filler is preferably from 0.1 to 1,000 parts by mass, and more preferably from 1 to 500 parts by mass with respect to 100 parts by mass of the sum of the polymer (A) and the polymer (B). When two or more kinds of the fillers are used, the total content thereof is required to be within the above-mentioned range. When the filler is contained in an amount within the above-mentioned range, there can be obtained a curable composition excellent in dispersibility of various components.

### <Silica>

The composition of one embodiment of the present invention can further contain silica. By using silica, the coatability of the curable composition is improved, and there can be obtained a cured product having excellent weatherability and stretchability.

Examples of the silica include fumed silica. Examples of the silica also include hydrophobic silica and hydrophilic silica, and hydrophobic silica is preferable.

The silica can be used singly or in combination of two or more kinds thereof.

The silica can be used singly or in combination of two or more kinds thereof.

In one embodiment of the present invention, the content of silica is preferably from 1 to 100 parts by mass, and more preferably from 3 to 50 parts by mass with respect to 100 parts by mass of the sum of the polymer (A) and the polymer (B). When two or more kinds of the silica are used, the total content thereof is required to be within the above-mentioned range.

### <Pigment>

The composition of one embodiment of the present invention can further contain a pigment. The use of a pigment is preferable in terms of improving toning and weatherability.

Examples of the pigment include: inorganic pigments such as iron oxide, chromium oxide, titanium oxide, and cobalt aluminate; and organic pigments such as phthalocyanine blue and phthalocyanine green.

The pigments can be used singly or in combination of two or more kinds thereof.

In one embodiment of the present invention, the content of the pigment is preferably from 1 to 200 parts by mass, and more preferably from 3 to 100 parts by mass with respect to 100 parts by mass of the sum of the polymer (A) and the polymer (B). When two or more kinds of the pigments are used, the total content thereof is required to be within the above-mentioned range.

### <Anti-aging agent>

The composition of one embodiment of the present invention may further contain an anti-aging agent such as an ultraviolet absorber, a light stabilizer, and an antioxidant.

Examples of the ultraviolet absorbers include benzotriazole ultraviolet absorbers and benzophenone ultraviolet absorbers, and benzotriazole ultraviolet absorbers are preferable. Examples of the benzotriazole ultraviolet absorbers include 2-(2-hydroxy-5-tert-butylphenyl)-2H-benzotriazole, 2-(2H-benzotriazole-2-yl)-4,6-bis(1-methyl-1-phenylethyl)phenol, 2-(2H-benzotriazole-2-yl)-6-(1-methyl-1-phenylethyl)-4-(1,1,3,3-tetramethylbutyl)phenol, a reaction product of methyl 3-(3-(2H-benzotriazole-2-yl)-5-tert-butyl-4-hydroxyphenyl)propionate and polyethylene glycol, and 2-(2H-benzotriazole-2-yl)-p-cresol.

Examples of the light stabilizer include hindered amine light stabilizers. Examples of the hindered amine light stabilizer include bis(1,2,2,6,6-pentamethyl-4-piperidyl)sebacate, methyl (1,2,2,6,6-pentamethyl-4-piperidinyl)sebacate, decanedioic acid bis(2,2,6,6-tetramethyl-1-(octyloxy)-4-piperidinyl)ester, bis(1,2,2,6,6-pentamethyl-4-piperidinyl)sebacate, and 2,4-bis[N-butyl-N-(1-cyclohexyloxy-2,2,6,6-tetramethylpiperidin-4-yl)amino]-6-(2-hydroxyethylamine)-1,3,5-triazine.

Examples of the antioxidant include hindered phenolic antioxidants, monophenolic antioxidants, bisphenol antioxidants, polyphenol antioxidants, and phosphorus antioxidants.

The anti-aging agent can be used singly or in combination of two or more kinds thereof.

In one embodiment of the present invention, the content of the anti-aging agent is preferably from 0.01 to 10 parts by mass, and more preferably from 0.1 to 5 parts by mass with respect to 100 parts by mass of the sum of the polymer (A) and the polymer (B). When two or more kinds of the anti-aging agents are used, the total content thereof is required to be within the above-mentioned range.

### <Dehydrating agent>

In order to further improve storage stability, the composition of one embodiment of the present invention can contain a small amount of dehydrating agent to the extent that curability and flexibility are not adversely affected.

Examples of the dehydrating agent include: hydrolyzable organosilicon compounds such as methyltrimethoxysilane, methyltriethoxysilane, tetramethoxysilane, tetraethoxysilane, dimethyldimethoxysilane, phenyltrimethoxysilane, diphenyldimethoxysilane, and vinyltrimethoxysilane; alkyl orthoformates such as methyl orthoformate and ethyl orthoformate; alkyl orthoacetates such as methyl orthoacetate and ethyl orthoacetate; and isocyanate compounds such as p-toluenesulfonyl isocyanate.

In one embodiment of the present invention, the content of the dehydrating agent is preferably from 0.1 to 25 parts by mass, and more preferably from 1 to 20 parts by mass with respect to 100 parts by mass of the sum of the polymer (A) and the polymer (B), in terms of storage stability and curability of the curable composition. When two or more kinds of the dehydrating agents are used, the total content thereof is required to be within the above-mentioned range.

### <Silane coupling agent having an amino group>

The composition of one embodiment of the present invention may further contain a silane coupling agent including an amino group (hereinafter also simply referred to as "aminosilane coupling agent") in terms of curability.

In the present invention, the aminosilane coupling agent refers to a compound in which a silicon atom with alkoxy group bonded and a functional group containing a nitrogen atom are included in one molecule. The aminosilane coupling agent serves as a promotor that accelerates moisture curing, and furthermore can improve the adhesion force of the resulting cured product.

Examples of the aminosilane coupling agent include 3-aminopropyltrimethoxysilane, 3-aminopropylmethyldimethoxysilane, 3-aminopropyltriethoxysilane, N-(2-aminoethyl)-aminomethyltrimethoxysilane, N-(2-aminoethyl)-aminomethyltriethoxysilane, N-(2-aminoethyl)-3-aminopropyltrimethoxysilane, N-(2-aminoethyl)-3-aminopropyltriethoxysilane, N-phenyl-3-aminopropyltrimethoxysilane, N-butyl-3-aminopropyltrimethoxysilane, and bis(3-(trimethoxysilyl)propyl)amine.

Among the aminosilane coupling agents, it is particularly preferable to use an aminosilane coupling agent having a primary amino group in terms of enabling to increase the curing rate.

The aminosilane coupling agents can be used singly or in combination of two or more kinds thereof.

In one embodiment of the present invention, the content of the aminosilane coupling agent is preferably from 0.1 to 20 parts by mass, and more preferably from 0.5 to 10 parts by mass with respect to 100 parts by mass of the sum of the polymer (A) and the polymer (B), in terms of adhesiveness, storage stability, and handleability of the curable composition. When two or more kinds of the aminosilane coupling agents are used, the total content thereof is required to be within the above-mentioned range.

### <Rheology control agent>

The composition of one embodiment of the invention may further contain a rheology control agent. The rheology control agent can improve the smoothness of the membrane surface.

As the rheology control agent, examples that can be used include acrylic-type, urea-type, urethane-type, amide-type, polyester-type, and layered inorganic compound-type rheology control agents. Among them, a polyester-type rheology control agent typified by "BYK R606 (polyhydroxycarboxylic acid ester)" manufactured by BYK Japan KK is preferable.

In one embodiment of the present invention, the rheology control agent is preferably contained in an amount of 0.1 to 10 parts by mass, more preferably from 0.2 to 5 parts by mass with respect to 100 parts by mass of the sum of the polymer (A) and the polymer (B). When two or more kinds of the rheology control agents are used, the total content thereof is required to be within the above-mentioned range. When the rheology control agent is contained in an amount within the above-mentioned range, a curable composition excellent in thixotropic properties and pseudoplasticity tends to be obtained.

### [Uses of curable composition, and cured product]

The composition of one embodiment of the present invention is excellent in storage stability by virtue of excellent compatibility among the polymer (A), the polymer (B), and the xylene resin (C), and is also excellent in coatability by virtue of high thixotropic properties. The cured product obtained from the composition is excellent in mechanical properties such as elongation at break and breaking strength.

The composition of one embodiment of the present invention has good crosslinkability, and hence can be suitably used for applications such as uses after hardening by crosslinking and uses utilizing the elasticity of the cured product. It is thought that, in the composition, the group represented by the above-mentioned formula (1) included in the polymer (A), for example, is hydrolyzed by moisture present in the air or in an adherend to which the curable composition is applied, thereby forming silanol groups, and then the silanol groups undergo dehydration condensation to form siloxane bonds, so that curing takes place. It is thought that in the polymer (B), by utilizing radiation such as ultraviolet rays, radicals are generated in a benzophenone group, for example, and abstract hydrogen atoms from the polymer, or photodimerization reaction occurs in a maleimide group, for example, so that curing takes place.

The composition of one embodiment of the present invention makes it possible to utilize different curing mechanisms of moisture curing and photocuring to make a difference between the adhesive strength of the composition on the light-irradiated surface and on the non-irradiated surface. The detailed reaction mechanism thereof is not clear, but is thought that the xylene resin (C) has light absorption in a long wavelength range between ultraviolet range and visible light range, which is not found in other tackifier resins, so that a reaction with a specific wavelength is promoted, and photocuring of the composition proceeds.

The composition of one embodiment of the present invention can also be used, for example, in a sheet prepared in a solution system or in a hot-melt (solvent-free system), and the shape thereof is not particularly limited.

### Examples

Hereinafter, one embodiment of the present invention will be described more specifically based on Examples, but the present invention is not limited to these Examples. In the following description of Examples, Comparative Examples, for example, unless otherwise specified, "part(s)" refers to "part(s) by mass".

### [Evaluation method for polymer]

Evaluation methods of various physical properties of the polymer is described below.

### <Number average molecular weight (Mn) and weight average molecular weight (Mw)>

The number average molecular weight (Mn) and the weight average molecular weight (Mw) of each polymer were analyzed by gel permeation chromatography (GPC), and calculated in terms of polystyrene under the following conditions.
·Apparatus: GPC-8220 (manufactured by Tosoh Corporation)
·Columns: G7000HXL/7.8 mm ID × 1 piece + GMHXL/7.8 mm ID × 2 pieces +
G2500HXL/7.8 mm ID × 1 piece
·Medium: tetrahydrofuran
·Flow rate: 1.0 mL/min
·Concentration: 1.5 mg/ml
·Injection amount: 300 µL
·Column temperature: 40°C

### <Glass transition temperature (Tg)>

The glass transition temperature (Tg) of each polymer was measured under the following conditions with a differential scanning calorimeter (DSC).
·Apparatus: DSC7000X (manufactured by Hitachi High-Tech Science Corporation)
·Temperature condition: temperature was raised from - 100°C to 30°C at 10°C/min
·Sample container: aluminum open cell
·Sample amount: 5 mg

### <Silicon element content>

The silicon element content of each polymer was determined in a manner that 7 mL of a mixed acid containing hydrogen fluoride was added to 0.2 g of the polymer, followed by wet ashing with a microwave decomposition apparatus (manufactured by Anton Paar Japan K.K.), and the ashed sample was added with ultrapure water to have a fixed volume of 50 mL, and then an inductively coupled plasma atomic emission spectrometer (ICP-AES) was used for the measurement under the following conditions.
·Apparatus: ICPE-9000 (manufactured by Shimadzu Corporation)
·High-frequency power: 1.20 kW
·Plasma gas: 10.00 L/min
·Auxiliary gas: 0.60 L/min
·Carrier gas: 0.70 L/min
·Observation direction: axial direction

### [Evaluation method for xylene resin]

### <Acid value>

The xylene resin was dissolved in toluene so its nonvolatile content as to be 20% to afford a xylene resin solution, then 20 g of the solution was weighed and the acid value was calculated by using an automatic titrator AUT-501 (manufactured by DKK-TOA CORPORATION) in accordance with the potentiometric titration method of JIS K 0070. The value of the calculated acid value divided by the nonvolatile content of the xylene resin was determined to be the acid value of the xylene resin. Note that, the acid value of 0.08 mgKOH/g or less was determined to be lower than limit of quantification. As the solvent for dissolving the xylene resin, an acid-free solvent other than toluene may be used.

### [Production Example 1]

In a stainless flask equipped with a stirrer, a nitrogen gas inlet, a thermometer, and a reflux condenser, 74 parts of n-butyl acrylate, 25 parts of 2-ethylhexyl acrylate, and 1 part of 3-methacryloxypropylmethyldimethoxysilane were weighed, followed by nitrogen purge, and then the temperature was raised to 70°C. Subsequently, while the content in the flask was maintained at 75°C, 0.9 parts of 3-mercaptopropylmethyldimethoxysilane was added thereto, and then 0.05 parts of 2,2'-azobisisobutyronitrile (AIBN) was added to initiate the reaction. After 3 hours from the start of the reaction, 0.05 parts of AIBN was added. After 6 hours from the start of the reaction, distilling off under reduced pressure was performed at 110°C for 3 hours to give a (meth)acrylic polymer (A-1). The (meth) acrylic polymer (A-1) had a silicon element content of 1,800 ppm, Mn of 18,000, Mw of 48,000, and Tg of -62°C.

### [Production Examples 2 and 3]

(Meth) acrylic polymers (A-2) and (A-3) were obtained in the same manner as in Production Example 1 except that the raw material components used were changed as shown in Table 1.

### [Table 1]

**Table 1**

| | | Production Example 1 | Production Example 2 | Production Example 3 |
|---|---|---|---|---|
| (Meth)acrylic polymer | | A-1 | A-2 | A-3 |
| Composition | n-Butyl acrylate | 74 | 74 | |
| | 2-Ethylhexyl acrylate | 25 | 25 | |
| | Methyl methacrylate | | | 65 |
| | 2-Ethylhexyl methacrylate | | | 30 |
| | 3-Methacryloxypropylmethyldimethoxysilane | 1 | | |
| | 3-Methacryloxypropyltrimethoxysilane | | | 5 |
| | Acryloxymethyltrimethoxysilane | | 1 | |
| | 3-Mercaptopropylmethyldimethoxysilane | 0.9 | | |
| | 3-Mercaptopropyltrimethoxysilane | | 0.9 | 4.5 |
| Physical properties | Silicon content [ppm] | 1,800 | 1,820 | 6,750 |
| | Number average molecular weight (Mn) [×10,000] | 1.8 | 2.1 | 0.6 |
| | Weight average molecular weight (Mw) [×10,000] | 4.8 | 5.4 | 1.5 |
| | Glass transition temperature (Tg) [°C] | -62 | -64 | 62 |

### [Example 1]

In a stainless steel container, 50 parts of the (meth)acrylic polymer (A-1), 50 parts of the polymer (B) "acResin A260 UV" (manufactured by BASF SE), 60 parts of the xylene resin (C) "NIKANOL HP-100" (manufactured by Fudow Company Limited), and 1 part of an antioxidant "ADK STAB AO-80" (manufactured by ADEKA CORPORATION) were weighed, and mixed at 140°C for 30 minutes. Subsequently, the temperature in the vessel was lowered to 110°C, and 1.3 parts of a photosensitizer "Anthracure UVS-1101" (manufactured by Kawasaki Kasei Chemical Industry Co., Ltd.) and 8 parts of a dehydrating agent "KBM-1003" (manufactured by Shin-Etsu Chemical Co., Ltd.)
were added thereto and mixed for 30 minutes. The resulting mixture was diluted and mixed with toluene so its nonvolatile content as to be 50%, and then 4 parts of a silane coupling agent having an amino group "KBM-603" (manufactured by Shin-Etsu Chemical Co., Ltd.) and 2 parts of a curing catalyst (D) "K-KAT 670" (manufactured by Kusumoto Chemicals, Ltd.) were added thereto, and the mixture was stirred and mixed for 1 minute to afford a curable composition.

Onto a sheet of release-treated polyethylene terephthalate (PET) film was coated the resulting curable composition so as to have a thickness after drying of 100 um, and dried at 110°C for 10 minutes to remove volatile components. After curing under conditions of 23°C/50% RH for 30 minutes, another sheet of release-treated PET film was laminated to the side opposite the release-treated PET film side of the cured product layer to afford a cured product sheet having a cured product layer. The resulting cured product sheet was subjected to various evaluations. Various evaluation results are shown in Table 2. The evaluation method will be described later.

### [Example 2 to 9, Comparative Example 1 to 4]

A cured product sheet was obtained in the same manner as in Example 1 except that the mixture compositions were changed as described in Table 2, and various evaluations were performed. Various evaluation results are shown in Table 2.

### [Evaluating method for curable composition and cured product]

Evaluating method for various physical properties of the curable composition and the cured product will be described below.

### <Appearance>

The appearance of the cured product sheet each obtained in Examples or Comparative Examples was visually evaluated.

### <Releasability>

For the cured product sheet obtained in Examples or Comparative Examples, the presence or absence of the cured product transferred to the PET film was visually checked at the time when the PET film was peeled off.

### <Shear adhesion force, Cohesive failure ratio>

In accordance with JIS-K 6850: 1999 (Adhesives-Determination of tensile lap-shear strength of rigid-to-rigid bonded assemblies), the PET film on one side of the cured product sheet obtained in each of Examples and Comparative Examples was peeled off, and a test piece made of stainless steel (having a thickness of 1 mm) was sticked onto the exposed cured product layer so as to have an adherend area of 12.5 mm × 25 mm. When irradiating with ultraviolet rays, a light source with primary wavelength of 365 nm was used to deliver ultraviolet rays onto the unpeeled PET film surface side so an integrated illuminance amount as to be 2000 mJ/cm². Subsequently, the other sheet of PET film was peeled off, and another test piece made of stainless steel (having a thickness of 1 mm) was sticked onto the exposed cured product layer, and pressure bonded by allowing a 2 kg roller to go back and forth once. After leaving to stand for 20 minutes after the pressure bonding, the resulting sample was subjected to a tensile test with a universal tensile tester AG-X manufactured by Shimadzu Corporation under the conditions of a tensile speed of 50 mm/min and 23°C in accordance with JIS K 6850: 1999 to measure the shear adhesion force (maximum point stress). Moreover, the cohesive failure ratio (the ratio of the cohesive failure area to the entire bonding area) of each of two sheets of stainless steel was visually evaluated. For convenience, the stainless steel test piece to which the cured product sheet is firstly sticked is referred to as SUS (A), and the stainless steel test piece to which the cured product sheet is secondly sticked is referred to as SUS (B).

### <Peel strength (180° Peel)>

A sheet of PET film on one side of the cured product sheet obtained in each of Examples and Comparative Examples was peeled off, and another sheet of PET film having a thickness of 125 um was sticked onto the exposed cured product layer, followed by cutting into a width of 20 mm. When irradiating with ultraviolet rays, a light source with primary wavelength of 365 nm was used to deliver ultraviolet rays onto the unpeeled PET surface side so an integrated illuminance amount as to be 2000 mJ/cm². The other PET film was peeled off under conditions of 23°C/50% RH, a stainless steel plate was sticked onto the exposed side of the cured product layer, and pressure bonded by allowing a 2 kg roller to go back and forth once. After leaving to stand for 20 minutes after the pressure bonding, the cured product sheet was peeled off from the stainless steel plate under conditions of 23°C/50% RH and a peeling angle of 180° at a peeling rate of 300 mm/min, and the peel force (peel strength) of the cured product sheet was measured with a universal tensile tester AG-X manufactured by Shimadzu Corporation. In the table, the symbol "af" means that "interface peeling has occurred", "cf" means that "cohesive fracture has occurred", and "cf, zip" means that "cohesive fracture and a zipping phenomenon have occurred".

### [Table 2]

**Table 2**

| | | Example 1 | Example 2 | Example 3 | Example 4 | Example 5 | Example 6 | Example 7 |
|---|---|---|---|---|---|---|---|---|
| (Meth)acrylic polymer (A) | A-1 | 50 | 50 | 50 | | | 50 | 50 |
| | A-2 | | | | 50 | | | |
| | A-3 | | | | | 50 | | |
| Polymer (B) | acResin A 260 UV | 50 | 50 | | 50 | 50 | 50 | 50 |
| | acResin A 204 UV | | | 50 | | | | |
| Xylene resin (C) | NIKANOL HP-100 | 60 | | 60 | 60 | 60 | 30 | 120 |
| | NIKANOL HP-210 | | 60 | | | | | |
| Tackifier resin | Neopolymer E-100 | | | | | | | |
| | YS Polyster TH130 | | | | | | | |
| | Mighty Ace K-125 | | | | | | | |
| | FTR-6100 | | | | | | | |
| Photosensitizer | Anthracure UVS-1101 | 1.3 | 1.3 | 1.3 | 1.3 | 1.3 | 1.3 | 1.3 |
| Antioxidant | ADK STAB AO-80 | 1 | 1 | 1 | 1 | 1 | 1 | 1 |
| Dehydrating agent | KBM-1003 | 8 | 8 | 8 | 8 | 8 | 8 | 8 |
| Aminosilane | KBM-603 | 4 | 4 | 4 | 4 | 4 | 4 | 4 |
| Curing catalyst (D) | K-KAT 670 | 2 | 2 | 2 | | 2 | 2 | 2 |
| Appearance | Cured product layer after coating | Transparent | Transparent | Transparent | Transparent | Transparent | Transparent | Transparent |
| Releasability | vs release-treated PET | Good | Good | Good | Good | Good | Good | Good |
| Shear adhesion force (without UV radiation) | SUS/SUS [N/mm²] | 0.3 | 0.2 | 0.2 | 0.3 | 1.1 | 0.1 | 0.4 |
| | SUS (A) | 100 | 100 | 100 | 100 | 100 | 100 | 100 |
| | SUS (B) | 90 | 100 | 90 | 90 | 50 | 100 | 70 |
| Shear adhesion force (with UV radiation) | SUS/SUS [N/mm2] | 0.5 | 0.3 | 0.4 | 0.6 | 2.0 | 0.2 | 0.6 |
| | SUS (A) | 100 | 100 | 100 | 100 | 100 | 100 | 100 |
| | SUS (B) | 0 | 0 | 10 | 0 | 0 | 40 | 30 |
| 180° Peel (without UV radiation) | vs SUS [N/20 mm] | 14.4 | 6.6 | 10.1 | 13.5 | 9.7 | 4.2 | 17.1 |
| | Fracture mode | cf | cf | cf | cf | af, contaminated | cf | cf |
| 180° Peel (with UV radiation) | vs SUS [N/20mm] | 6.4 | 7.5 | 8.8 | 5.5 | 8.8 | 3.9 | 11.3 |
| | Fracture mode | af | af | af | af | af | af | af |

**Table 2 (continued)**

| | | Example 8 | Example 9 | Comparative Example 1 | Comparative Example 2 | Comparative Example 3 | Comparative Example 4 |
|---|---|---|---|---|---|---|---|
| (Meth)acrylic polymer (A) | A-1 | 70 | | 50 | 50 | 50 | 50 |
| | A-2 | | | | | | |
| | A-3 | | 10 | | | | |
| Polymer (B) | acResin A 260 UV | 30 | 90 | 50 | 50 | 50 | 50 |
| | acResin A 204 UV | | | | | | |
| Xylene resin (C) | NIKANOL HP-100 | 60 | 60 | | | | |
| | NIKANOL HP-210 | | | | | | |
| Tackifier resin | Neopolymer E-100 | | | 60 | | | |
| | YS Polyster TH130 | | | | 60 | | |
| | Mighty Ace K-125 | | | | | 60 | |
| | FTR-6100 | | | | | | 60 |
| Photosensitizer | Anthracure UVS-1101 | 1.3 | 1.3 | 1.3 | 1.3 | 1.3 | 1.3 |
| Antioxidant | ADK STAB AO-80 | 1 | 1 | 1 | 1 | 1 | 1 |
| Dehydrating agent | KBM-1003 | 8 | 8 | 8 | 8 | 8 | 8 |
| Aminosilane | KBM-603 | 4 | 4 | 4 | 4 | 4 | 4 |
| Curing catalyst (D) | K-KAT 670 | 2 | 2 | 2 | 2 | 2 | 2 |
| Appearance | Cured product layer after coating | Transparent | Transparent | Transparent | Transparent | Transparent | Opaque |
| Releasability | vs release-treated PET | Good | Good | Good | Good | Good | Partial transfer |
| Shear adhesion force (without UV radiation) | SUS/SUS [N/mm²] | 0.1 | 0.2 | 0.6 | 2.3 | 2.1 | Cannot be evaluated |
| | SUS (A) | 100 | 100 | 90 | 80 | 30 | |
| | SUS (B) | 100 | 100 | 100 | 50 | 50 | |
| Shear adhesion force (with UV radiation) | SUS/SUS [N/mm2] | 0.2 | 1.1 | 0.7 | 2.1 | 2.1 | |
| | SUS (A) | 100 | 100 | 20 | 30 | 30 | |
| | SUS (B) | 30 | 10 | 0 | 50 | 50 | |
| 180° Peel (without UV radiation) | vs SUS [N/20 mm] | 2.7 | 16.2 | 6.4 | 19.9 | 13.8 | |
| | Fracture mode | cf | cf | cf, zip | cf | cf | |
| 180° Peel (with UV radiation) | vs SUS [N/20mm] | 2.1 | 14.5 | 13.7 | 13.8 | 13.8 | |
| | Fracture mode | af, contaminated | af | cf, zip | cf | cf | |

In Table 2, details of each component used in Examples and Comparative Examples are as follows.
·Polymer (B):
   acResin A260 UV (manufactured by BASF SE) (Butyl acrylate copolymer with a benzophenone group bonded, Mn: 42,000, Mw: 182,000, Tg: -39°C)
   acResin A204 UV (manufactured by BASF SE) (2-Ethylhexyl acrylate copolymer with a benzophenone group bonded, Mn: 39,000, Mw: 191,000, Tg: -34°C)
·Xylene resin (C):
   NIKANOL HP-100 (manufactured by Fudow Company Limited) (Alkylphenol-modified xylene resin, acid value: 0.1 mg KOH/g or less (Lower than limit of quantification))
   NIKANOL HP-210 (manufactured by Fudow Company Limited) (Alkylphenol-modified xylene resin, acid value: 0.1 mg KOH/g or less (Lower than limit of quantification))
·Tackifier resin:
   Neopolymer E-100 (manufactured by ENEOS) (Aromatic petroleum resin)
   YS Polyster TH130 (manufactured by YASUHARA CHEMICAL CO.,LTD.) (Terpene phenol resin)
   Mighty Ace K-125 (manufactured by YASUHARA CHEMICAL CO.,LTD.) (Terpene phenol resin)
   FTR-6100 (manufactured by Mitsui Chemicals, Inc.) (Aromatic hydrocarbon resin)
·Photosensitizer:
   Anthracure UVS-1101 (manufactured by Kawasaki Kasei Chemicals Ltd.) (Organic compound photosensitizer)
·Antioxidant:
   ADK STAB AO-80 (manufactured by ADEKA CORPORATION) (Hindered phenolic antioxidant)
·Dehydrating agent:
   KBM-1003 (manufactured by Shin-Etsu Chemical Co., Ltd.) (Vinyltrimethoxysilane)
·Aminosilane (Silane coupling agent):
   KBM-603 (manufactured by Shin-Etsu Chemical Co., Ltd.) (N-2-(Aminoethyl)-3-aminopropyltrimethoxysilane)
·Curing catalyst (D):
   K-KAT 670 (manufactured by Kusumoto Chemicals, Ltd.) (Zinc carboxylate catalyst)

## Claims

1. A curable composition, comprising:
a (meth)acrylic polymer (A) having a group represented by the following formula (1);
a polymer (B) having a radiation-reactive group and having a number average molecular weight of 10,000 to 1,000,000; and
a xylene resin (C),
wherein the polymer (B) does not have any group represented by the following formula (1):
Formula (1): -X-(CH₂)ₙ-SiR¹₃
[in the formula (1), n is an integer of 1 to 3; three R¹ groups are each independently an alkyl group with 1 to 20 carbon atoms, an alkoxy group with 1 to 20 carbon atoms, or a hydroxyl group, and at least one of R¹ groups is the alkoxy group or a hydroxyl group; X is a divalent group represented by -O-, -COO-, -S-, -N(R²)-, -CH(OH)-CH₂-O-, -O-CO-NH-, or - N(R²)-CO-N(R³)-; R² and R³ are each a hydrogen atom, a hydrocarbon group, or a halogenated hydrocarbon group, and R² and R³ may be the same or different.].

2. The curable composition according to claim 1, wherein the curable composition comprises 1 to 90 parts by mass of the (meth)acrylic polymer (A), 10 to 99 parts by mass of the polymer (B), and 10 to 1,000 parts by mass of the xylene resin (C) (provided that the total amount of the polymer (A) and the polymer (B) is 100 parts by mass).

3. The curable composition according to claim 1, wherein the (meth)acrylic polymer (A) has a glass transition temperature of -80 to 100°C, and a number average molecular weight of more than 1,000 and 100,000 or less, and contains 500 ppm or more of silicon element.

4. The curable composition according to claim 3, wherein the number average molecular weight of the (meth)acrylic polymer (A) is smaller than a number average molecular weight of the polymer (B).

5. The curable composition according to claim 1, wherein the polymer (B) is a polymer having a benzophenone group as a radiation-reactive group.

6. The curable composition according to claim 5, wherein the polymer (B) is an acrylic polymer.

7. The curable composition according to claim 1, wherein the xylene resin (C) has an acid value of 0.1 mgKOH/g or less.

8. The curable composition according to claim 1, wherein the xylene resin (C) is an alkylphenol-modified xylene resin.

9. The curable composition according to claim 1, wherein the curable composition further comprises a curing catalyst (D), and the curing catalyst (D) is a non-tin curing catalyst.

10. A cured product obtained from the curable composition according to any one of claims 1 to 9.
